Europäisches Patentamt

European Patent Office

Office européen des brevets

(11) Veröffentlichungsnummer: **0 477 574 A1**

## (12) EUROPÄISCHE PATENTANMELDUNG

(21) Anmeldenummer: **91114482.2**

(22) Anmeldetag: **28.08.91**

(51) Int. Cl.5: **G02B 6/38**

(30) Priorität: **25.09.90 DE 4030303**
**25.09.90 DE 4030301**

(43) Veröffentlichungstag der Anmeldung:
**01.04.92 Patentblatt 92/14**

(84) Benannte Vertragsstaaten:
**AT BE CH DE FR GB IT LI NL**

(71) Anmelder: **SIEMENS AKTIENGESELLSCHAFT**

Wittelsbacherplatz 2
W-8000 München 2(DE)

(72) Erfinder: **Hauf, Günter**
**Höfatsstrasse 2**
**W-8901 Langweid/Lech(DE)**
Erfinder: **Blondeel, Geert**
**Grote Steenweg 306**
**B-9260 Oordegem(BE)**

(54) **Verteilereinrichtung für Lichtwellenleiter.**

(57) Die Erfindung betrifft Verteilereinrichtungen für ankommende und abgehende Lichtwellenleiter.

Die ankommenden und abgehenden LWL-Kabel (2) enden in Steckerkassetten (1), welche an ihrer Frontseite Durchführungskupplungen (3) aufweisen. Die einzelnen Fasern (4) der LWL-Kabel (2) sind mit einem LWL-Stecker (5) verbunden, in welchem ein Fingerspleiß (6) fest integriert ist. Am äußeren Ende des Fingerspleißes (6) ist die Faser (4) des LWL-Kabels (2) angeschlossen, während das innere Ende über eine LWL-Faser fest mit dem Steckerkontakt (8) des LWL-Steckers (5) verbunden ist.

FIG 2

Die Erfindung betrifft eine Verteilereinrichtung für ankommende und abgehende Lichtwellenleiter.

Bekannte Verteilereinrichtungen für Lichtwellenleiter erfordern umfangreiche und platzaufwendige Konstruktionen. So müssen die ankommenden und abgehenden Lichtwellenleiterkabel mit Lichtwellenleiter-Endstücken, welche werksseitig mit Steckern versehen sind, aufwendig an Ort und Stelle verschweißt werden. Dies erfordert nicht nur einen hohen Arbeitsaufwand bei der Montage, sondern erfordert aufgrund der großen Anzahl von Spleißkassetten für die einzelnen Fusionsspleiße einen enormen Platzbedarf.

Aufgabe der vorliegenden Erfindung ist es, eine Verteilereinrichtung der eingangs genannten Art anzugeben, die am Montageort einfach aufzubauen ist und dabei nur einen geringen Platzbedarf benötigt.

Diese Aufgabe wird bei einer Verteilereinrichtung für ankommende und abgehende Lichtwellenleiter dadurch gelöst, daß die ankommenden und abgehenden Lichtwellenleiterkabel in Steckerkassetten enden, daß die Steckerkassetten an ihren Frontseiten mit Durchführungskupplungen versehen sind, und daß die Enden der einzelnen Fasern der Lichtwellenleitekabel jeweils mit einem Lichtwellenleiterstecker verbunden sind.

Da man mit einem Lichtwellenleiter-Fingerspleiß Lichtwellenleiter ohne Werkzeug und Fremdenergie einfach und zeitsparend verbinden kann, müssen bei der erfindungsgemäßen Verteilereinrichtung die ankommenden und abgehenden Kabel lediglich mit den freien Anschlußseiten der Fingerspleiße verbunden werden. Auf diese Weise ist ein einfacher Anschluß der Lichtwellenleiterkabel möglich.

Weiterhin benötigt die Verteilereinrichtung gemäß der vorliegenden Erfindung einen geringen Platzbedarf, da die eigentlichen Spleißkassetten wegfallen. Durch die Aufteilung der erfingungsgemäßen Verteilereinrichtung auf mehrere Steckerkassetten ist ein dem Leitungsbedarf entsprechender Aufbau möglich.

Eine zweckmäßige Ausgestaltung der erfindungsgemäßen Verteilereinrichtung ist dadurch gekennzeichnet, daß die einzelnen Steckkassetten als geschlossene Gehäuse mit einer verriegelbaren Schublade ausgebildet sind. Auf diese Weise wird ein mißbräuchlicher Zugriff auf die Spleißstellen verhindert, da per Schlüssel eine definierte Zugangsberechtigung des entsprechenden Personals ermöglicht wird.

Eine andere zweckmäßige Ausgestaltung der Verteilereinrichtung gemäß der vorliegenden Erfindung besteht darin, daß innerhalb der Steckerkassetten Ablagevorrichtungen für die einzelnen Lichtwellenleiter-Fasern vorgesehen sind. So sind auch nachträglich Belegungsänderungen der ankommenden und abgehenden Lichtwellenleiter möglich.

Eine besonders vorteilhafte Ausgestaltung der erfindungsgemäßen Verteilereinrichtung betrifft einen Lichtwellenleiterstecker, bestehend aus Steckkontakt und Steckergehäuse.

Derartige aus Steckergehäuse und Steckkontakt bestehende Lichtwellenleiterstecker dienen zum Anschluß von ankommenden Lichtwellenleiter an entsprechende Geräte. Die Verbindung derartiger bekannter Stecker mit dem Lichtwellenleiter erfordert einen erheblichen Arbeitsaufwand, der nur in einer dafür ausgestatteten Werkstatt durchzuführen ist. Es ist zwar auch bekannt, Lichtwellenleiterstecker beim Kunden mit einem entsprechenden Leiter zu verbinden, hierbei ist es jedoch von Nachteil, daß eine mehrfache Werkzeuginvestition notwendig ist, daß die Steckermontage vor Ort einen hohen Zeitaufwand wegen des Aushärtens der Klebeverbindung erfordert, und daß aufgrund schlechter Prüfmöglichkeiten nur eine geringe Qualitätssicherung gegeben ist.

Eine andere Möglichkeit des Anschlusses von Geräten an ankommende Lichtwellenleiter besteht darin, vormontierte Lichtwellenleiterstecker mit einem Lichtwellenleiter vorgegebener Länge zu verwenden, wobei der in seiner Länge begrenzte und mit dem Lichtwellenleiterstecker verbundene Lichtwellenleiter mittels eines Spleißes mit dem ankommenden Lichtwellenleiter verbunden wird. In diesem Falle besteht ein Nachteil darin, daß zusätzlich am Anschlußort viel Platz benötigende Spleißkassetten notwendig sind.

Ein Lichtwellenleiterstecker, welcher vor Ort auf einfache Weise an ein ankommendes Lichtwellenleiterkabel anschließbar ist, ist dadurch gekennzeichnet, daß mit dem Steckergehäuse ein Fingerspleiß derart fest verbunden ist, daß eine der beiden Anschlußseiten des Fingerspleißes aus dem Steckergehäuse herausragt, und daß die innenliegende Anschlußseite des Fingerspleißes mit einem Lichtwellenleiter belegt ist, wobei das andere Ende dieses Lichtwellenleiters mit dem Steckkontakt fest verbunden ist.

Da man mit einem Lichtwellenleiter-Fingerspleiß ein- und mehrmodige Lichtwellenleiter ohne Werkzeug und Fremdenergie einfach und zeitsparend montieren kann, kann bei dem erfindungsgemäßen Lichtwellenleiterstecker das ankommende Kabel auf einfache Weise mit der freien Anschlußseite des Fingerspleißes verbunden werden. Auf diese Weise ist ein einfacher Anschluß des Lichtwellenleitersteckers an das ankommende Lichtwellenleiterkabel möglich.

Im folgenden wird die Erfindung anhand eines in der Zeichnung dargestellten Ausführungsbeispiels näher beschrieben.

Es zeigen

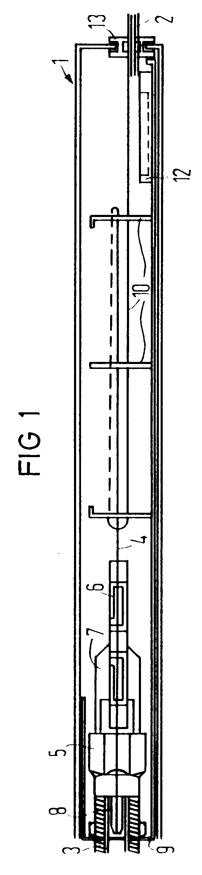

FIG 1　　einen senkrechten Längsschnitt durch eine Steckerkassette einer Verteilereinrichtung gemäß der Erfindung,

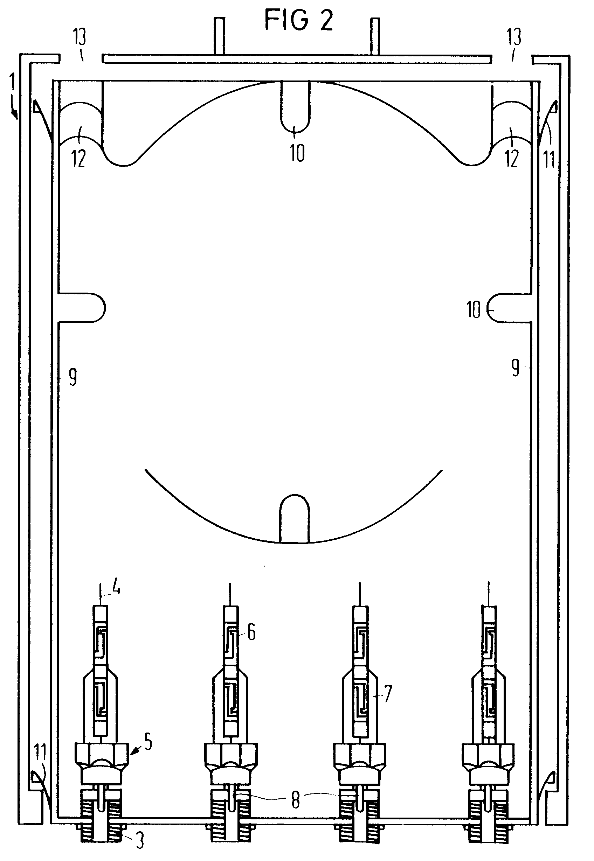

FIG 2　　einen waagrechten Längsschnitt durch eine Steckerkassette gemäß FIG 1,

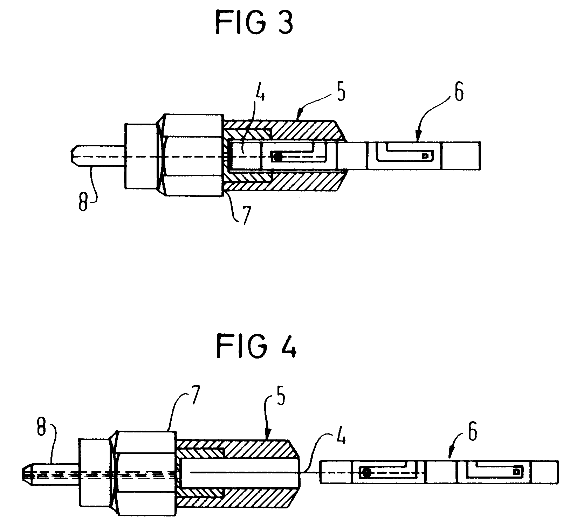

FIG 3　　eine schematische Darstellung eines gemäß der Erfindung aufgebauten Lichtwellenleitersteckers, und

FIG 4　　eine schematische Darstellung des Lichtwellenleitersteckers gemäß FIG 3 vor dem Zusammenbau.

In der Zeichnung ist lediglich eine einzige Steckerkassette 1 einer Verteilereinrichtung gemäß der vorliegenden Erfindung gezeigt. Die eigentliche Verteilereinrichtung kann jedoch aus beliebig vielen Steckerkassetten 1 bestehen, die entweder übereinander oder nebeneinander angeordnet sind.

Die ankommenden und abgehenden Lichtwellenleiterkabel 2 werden auf der Rückseite der Steckerkassetten 1 durch Durchführungen 13 und über Zugentlastungen 12 ins Innere der Steckerkassetten geführt. Dabei ist die Größe der Steckerkassetten u. a. abhängig von der Faseranzahl je Lichtwellenleiterkabel. Die einzelnen Lichtwellenleiterfasern 4 der Lichtwellenleiterkabel 2 werden in einer bestimmten Länge innerhalb der Ablagevorrichtung 10 abgelegt, nach dem das Ende der Lichtwellenleiterfaser 4 mit dem Lichtwellenleiterstecker 5 verbunden worden ist.

Der Lichtwellenleiterstecker 5 besteht im wesentlichen aus dem Steckergehäuse 7 und dem Steckkontakt 8. Mit dem Gehäuse 7 des Lichtwellenleitersteckers 5 ist ein Fingerspleiß 6 fest verbunden. Mit einem Fingerspleiß kann man Lichtwellenleiter ohne Werkzeug und Fremdenergie einfach und zeitsparend montieren.

Entsprechend dem Durchmesser der Fasern sind die Klemmstücke entsprechend abgestuft. Im Gegensatz zu vielen anderen mechanischen Verbindern erübrigt sich ein besonderes Präparieren der Faserenden. Es entfallen auch das Verkleben sowie das aufwendige Schleifen der Endflächen vollständig. Die Faserenden werden mit einem Trenngerät auf Länge geschnitten und in den bereits werksseitig mit Immersion gefüllten Fingerspleiß eingeführt. Nach dem Zuschieben der Klemmringe ergibt sich eine dauerhafte kraftschlüssige Verbindung der beiden Lichtwellenleiter.

Bei dem hier dargestellten Lichtwellenleiterstecker 5 wird nun die innen liegende Anschlußseite des Fingerspleißes 6 mit einem Lichtwellenleiterende bestückt, wobei das andere Ende dieses Lichtwellenleiterendes mit dem Steckkontakt 8 bereits werksseitig fest verschweißt worden ist. Aufgrund des integrierten Fingerspleißes 6 ist es also möglich den Lichtwellenleiterstecker vor Ort ohne großen Aufwand leicht mit einem der ankommenden bzw. abgehenden Lichtwellenleiterfasern zu verbinden.

In die Frontplatte der Steckerkassetten 1 sind Durchführungskupplungen 3 eingelassen. Diese Durchführungskupplungen 3 werden von innen mit den Lichtwellenleitersteckern 5 bestückt. Außerhalb der Steckerkassetten 1 werden die einzelnen Durchführungskupplungen 3 mittels entsprechend aufgebauten Rangierleitungen - hier nicht dargestellt - entsprechend den Verteilungswünschen miteinander verbunden.

Um einen mißbräuchlichen Zugriff zu den einzelnen Spleißstellen zu verhindern, sind die einzelnen Steckerkassetten 1 als geschlossene Gehäuse mit einer verriegelbaren Schublade 9 ausgebildet. Hierzu sind die Schubladen 9 mit in der Zeichnung angedeuteten Verriegelungen 11 versehen. Diese Verriegelungen 11 können mittels eines passenden Schlüssels entriegelt werden.

**Patentansprüche**

1.　Verteilereinrichtungen für ankommende und abgehende Lichtwellenleiter, **dadurch gekennzeichnet,** daß die ankommenden und abgehenden Lichtwellenleiterkabel (2) in Steckerkassetten (1) enden, daß die Steckerkassetten (1) an ihren Frontseiten mit Durchführungskupplungen (3) versehen sind, und daß die Enden (4) der einzelnen Fasern der Lichtwellenleiterkabel (2) jeweils mit einem Lichtwellenleiterstecker (5) verbunden sind.

2.　Verteilereinrichtung nach Anspruch 1, **dadurch gekennzeichnet,** daß die einzelnen Steckerkassetten (1) als geschlossene Gehäuse mit einer verriegelbaren Schublade (9) ausgebildet sind.

3.　Verteilereinrichtung nach Anspruch 1, **dadurch gekennzeichnet,** daß innerhalb der Steckerkassetten (1) Ablagevorrichtungen (10) für die einzelnen Lichtwellenleiterfasern (4) vorgesehen sind.

4.　Lichtwellenleiterstecker für Verteilereinrichtungen nach Anspruch 1, bestehend aus Steckkontakt und Steckergehäuse, **dadurch gekennzeichnet,** daß mit dem Stekkergehäuse (2) ein Fingerspleiß (4) derart fest verbunden ist, daß eine der beiden Anschlußseiten des Fingerspleißes (4) aus dem Steckergehäuse (2) herausragt, und daß die innenliegende Anschlußseite des Fingerspleißes (4) mit einem Lichtwellenleiter (5) belegt ist, das andere Ende dieses Lichtwellenleiters (5) mit dem Steckkontakt festverbunden ist.

FIG 1

# FIG 2

FIG 3

FIG 4

## EINSCHLÄGIGE DOKUMENTE

EP 91114482.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DE - A - 2 846 951 (SIEMENS) * Fig. 1; Anspruch 1 * -- | 1 | G 02 B 6/38 |
| A | US - A - 4 678 264 (BOWEN et al.) * Fig. 1; Zusammenfassung * -- | 1 | |
| A | US - A - 4 787 706 (CANNON, JR. et al.) * Fig. 2 * -- | 1 | |
| A | DE - A - 3 826 927 (INGENIEURHOCHSCHULE MITTWEIDA) * Zusammenfassung * ---- | 1 | |

RECHERCHIERTE
SACHGEBIETE (Int. Cl.⁵)

G 02 B 6/00
G 02 B 5/00

Der vorliegende Recherchenbericht wurde für alle Patentansprüche erstellt.

| Recherchenort | Abschlußdatum der Recherche | Prüfer |
|---|---|---|
| WIEN | 21-11-1991 | HUBER |

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument